# EUROPEAN PATENT APPLICATION

(11) **EP 4 280 336 A1**
(43) Date of publication of application: **22.11.2023**
(21) Application number: 22922359.9
(22) Date of filing: 09.12.2022
(51) Int. Cl.: H01M 10/0569, H01M 10/0568, H01M 4/38, H01M 4/36, H01M 4/62, H01M 10/052

(54) **LITHIUM-SULFUR BATTERY WITH IMPROVED LIFESPAN PERFORMANCE**

(30) Priority: 18.01.2022 KR 20220007015
(71) Applicant: LG Energy Solution, Ltd., Seoul 07335 (KR)
(72) Inventor: PARK, Seonghyo, Daejeon 34122 (KR); LEE, Changhoon, Daejeon 34122 (KR); PARK, Intae, Daejeon 34122 (KR); CHOI, Ran, Daejeon 34122 (KR); LEE, Hyunsoo, Daejeon 34122 (KR); KIM, Yonghwi, Daejeon 34122 (KR); SONG, Myeongjun, Daejeon 34122 (KR)
(74) Representative: Goddar, Heinz J.
(86) International application number: PCT/KR2022/020000
(87) International publication number: WO 2023/140502

(57) **Abstract**

Disclosed is a lithium-sulfur battery with improved lifetime performance, which can utilize 80% or more of the theory discharging capacity (1,675 mAh/g) of sulfur and can operate for a long life, by using an electrolyte system (discharging capacity -1,600 mAh/gs) of SSE (sparingly solvating electrolyte) excluding nitrile solvents and at the same time applying a carbon material with a high specific surface area to the positive electrode. The lithium-sulfur battery comprises an electrolyte containing a first solvent containing fluorine-based ether compounds, a second solvent containing a glyme-based compound, and a lithium salt containing lithium bis (pentafluoroethanesulfonyl) imide; and a positive electrode containing sulfur and carbon material as an active material.

## Description

### [Technical Field]

This application claims the benefit of priority based on Korean Patent Application No. 10-2022-0007015 filed on January 18, 2022, all contents of which are incorporated as a part of this specification.

The present invention relates to a lithium-sulfur battery with excellent lifetime performance, and more particularly, to a lithium-sulfur battery with improved lifetime performance that can utilize 80% or more of the theoretical discharging capacity (1,675 mAh/g) of sulfur and can operate for a long lifetime, by using an electrolyte system (discharging capacity -1,600 mAh/gs) of SSE (sparingly solvating electrolyte) excluding nitrile solvents and at the same time applying a carbon material with a high specific surface area to the positive electrode.

### [Background Art]

As interest in energy storage technology continues to increase, since its application is expanding from energy for mobile phones, tablets, laptops and camcorders to even energy for electric vehicles (EVs) and hybrid electric vehicles (HEVs), research and development of electrochemical devices are gradually increasing. The field of electrochemical devices is an area that is receiving the most attention in this respect. Among them, the development of secondary batteries such as a lithium-sulfur battery capable of being charged/discharged has become a focus of attention. In recent years, in developing these batteries, in order to improve capacity density and specific energy, it has led to research and development in designs for new electrodes and batteries.

Among these electrochemical devices, the lithium-sulfur battery (Li-S battery) has a high energy density (theoretical capacity), and thus is in the spotlight as a next-generation secondary battery that can replace a lithium-ion battery. In such a lithium-sulfur battery, a reduction reaction of sulfur and an oxidation reaction of lithium metal occur during the discharging. At that time, sulfur forms lithium polysulfide (LiPS) having a linear structure from Ss having a ring structure. This lithium-sulfur battery is characterized by showing a stepwise discharging voltage until the polysulfide is completely reduced to Li₂S.

However, the biggest obstacle to commercialization of the lithium-sulfur battery is its lifetime. During the charging/discharging process, the charging/discharging efficiency is reduced and the life of the battery is deteriorated. There are various reasons for the deterioration of the lifespan of the lithium-sulfur battery, such as side reactions of electrolytes (deposition of by-products due to electrolyte decomposition), instability of lithium metal (short circuit occurs due to dendrite growth on lithium negative electrode), deposition of positive electrode by-products (leaching of lithium polysulfide from the positive electrode) and the like.

That is, in a battery using a sulfur-based compound as a positive electrode active material and an alkali metal such as lithium as a negative electrode active material, the leaching and shuttle phenomenon of lithium polysulfide occur during charging/discharging, and the lithium polysulfide is transferred to the negative electrode, thereby reducing the capacity of the lithium-sulfur battery, and thus the lithium-sulfur battery has a major problem in that its lifetime is reduced and its reactivity is reduced. That is, since the lithium polysulfide leached from the positive electrode has high solubility in the organic electrolyte solution, it can undesirably move toward the negative electrode (PS shuttling) through the electrolyte. As a result, a decrease in capacity occurs due to irreversible loss of the positive electrode active material, and a decrease in the lifetime of the battery occurs due to deposition of sulfur particles on the surface of the lithium metal by side reactions.

Meanwhile, the behavior of such a lithium-sulfur battery can vary greatly depending on the electrolyte. The electrolyte when sulfur in the positive electrode is leached into the electrolyte in the form of lithium polysulfide (LiPS) is called Catholyte, and the electrolyte when sulfur hardly leaches out in the form of lithium polysulfide is called sparingly solvating electrolyte (SSE). Since the lithium-sulfur battery using the existing catholyte system depends on the liquid phase reaction (catholyte type) through the production of intermediate product (intermediate polysulfide) having the form of Li₂Sₓ, there is a problem that the battery does not fully utilize the high theoretical discharging capacity (1,675 mAh/g) of sulfur, and rather, the battery is degraded due to the leaching of polysulfide and thus the lifetime of the battery is drastically reduced.

On the other hand, recently, an electrolyte system of SSE (sparing solvating electrolyte), which can suppress the leaching of polysulfide, has been developed, and thus more than 80% of the theoretical discharging capacity of sulfur can be utilized, but most of the SSE electrolyte system relies on nitrile-based solvents. In this case, the lithium negative electrode is degenerated by the reaction with the lithium negative electrode, and also there is a fatal disadvantage in the lifetime of the battery, such as gas generation inside the lithium-sulfur battery.

Accordingly, in the art, various studies on a lithium-sulfur battery in which sulfur, a positive electrode active material, does not leach into the electrolyte (studies such as adding LiPS adsorption material to positive electrode composites or modifying separators made of existing PE, etc.) are being conducted, and in particular, studies on an electrolyte solution capable of proceeding a solid-to-solid reaction in which sulfur is converted to Li₂S, a final discharging product are also being conducted, but it has not yet achieved any significant results. Therefore, there is a demand for the development of an innovative battery that does not degrade the lithium negative electrode or generate gas inside the battery (i.e., improvement of lifetime) and has high energy density, while using the SSE electrolyte system that can utilize 80% or more of the theoretical discharging capacity of sulfur ( 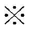 the high energy density means about 400 Wh/kg or more or 600 Wh/L or more, and to build it, an electrolyte and positive electrode active material system that can operate at 4.0 mAh/cm² or more and a porosity of 60% or less are required).

### [Disclosure]

### [Technical Problem]

Therefore, it is an object of the present invention to provide a lithium-sulfur battery with improved life performance that can utilize 80% or more of the theoretical discharging capacity (1,675 mAh/g) of sulfur and can operate for a long lifetime, by using an electrolyte system (discharging capacity -1,600 mAh/gs) of SSE (sparingly solvating electrolyte) excluding nitrile solvents and at the same time applying a carbon material with a high specific surface area to the positive electrode.

### [Technical Solution]

In order to achieve the above object, the present invention provides a lithium-sulfur battery, comprising an electrolyte containing a first solvent containing fluorine-based ether compounds, a second solvent containing a glyme-based compound, and a lithium salt containing lithium bis (pentafluoroethanesulfonyl) imide; and a positive electrode containing sulfur and carbon material as an active material.

### [Advantageous Effects]

According to the lithium-sulfur battery with improved life performance according to the present invention, there is an advantage that the lithium-sulfur battery can utilize 80% or more of the theoretical discharging capacity (1,675 mAh/g) of sulfur and can operate for a long lifetime, by using an electrolyte system (discharging capacity -1,600 mAh/gs) of SSE (sparingly solvating electrolyte) excluding nitrile solvents and at the same time applying a carbon material with a high specific surface area to the positive electrode. In addition, the lithium-sulfur battery with improved lifetime performance according to the present invention has an electrolyte and positive electrode active material system that can operate even at 4.0 mAh/cm² or more and a porosity of 60% or less, and thus has also an advantage of maintaining a high energy density of about 400 Wh/kg or more or 600 Wh/L or more.

### [Description of Drawings]

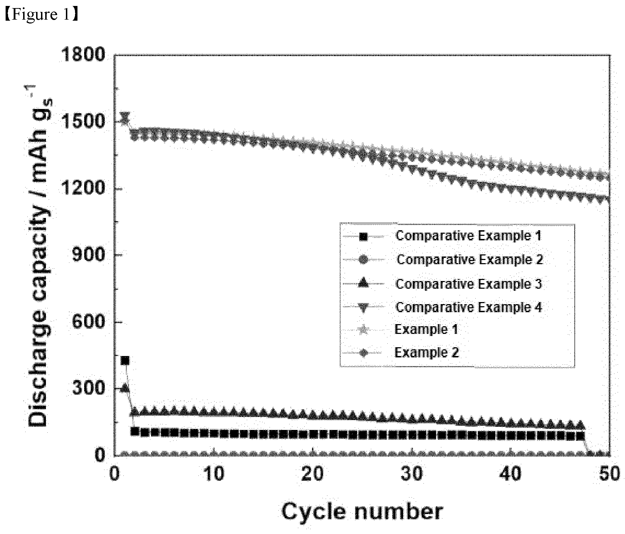

FIG. 1 is a graph showing discharging capacity and lifetime characteristics of lithium-sulfur batteries manufactured according to an example of the present invention and a comparative example.

### [Best Mode]

Hereinafter, the present invention will be described in detail.

The lithium-sulfur battery according to the present invention comprises an electrolyte containing a first solvent containing fluorine-based ether compounds, a second solvent containing a glyme-based compound, and a lithium salt containing lithium bis (pentafluoroethanesulfonyl) imide; and a positive electrode containing sulfur and carbon material as an active material.

Recently, although an electrolyte system of SSE (sparing solvating electrolyte), which can suppress the leaching of polysulfide, has been developed, making it possible to utilize 80% or more of the theoretical discharging capacity of sulfur, since due to the nature of the SSE electrolyte system, which relies on nitrile-based solvents, the lithium negative electrode is degenerated by the reaction with the lithium negative electrode and gas is generated inside the lithium-sulfur battery, there is still an unresolved problem of shortening the lifetime of the battery.

Accordingly, the applicant of the present invention has developed a lithium-sulfur battery having a high energy density of about 400 Wh/kg or more or 600 Wh/L or more, by excluding nitrile-based electrolyte solvents, which are fatal to the lifetime of the lithium-sulfur battery, and using a stable ether-based electrolyte solvent, and also by providing an electrolyte and positive electrode active material system that does not degrade the lithium negative electrode or generate gas inside the battery (i.e., improvement of lifetime) and can be operated at 4.0 mAh/cm² or more and a porosity of 60% or less, while using an SSE electrolyte system with a utilization rate of sulfur of 80% or more, preferably 90 to 100%, and more preferably 94 to 100% of the theoretical discharging capacity. Meanwhile, the 'utilization rate of sulfur' is specifically the ratio of discharging capacity (mAh) per weight (gram) of sulfur element contained in the positive electrode of the battery relative to 1,675 mAh/g (sulfur), which is the theoretical capacity per weight of sulfur. For example, when the discharging capacity per weight of sulfur element present in the positive electrode of a lithium-sulfur battery is 1,600 mAh/g (sulfur), the utilization rate of sulfur is 95.5% (1,600/1,675).

That is, the applicant of the present invention sought a way to supplement the problems of the existing technology that could not maximize the performance of the battery while using the SSE electrolyte system, and as a result, have confirmed the synergistic effect between an electrolyte containing a first solvent containing fluorine-based ether compounds, a second solvent containing a glyme-based compound, and a lithium salt containing lithium bis (pentafluoroethanesulfonyl) imide and a positive electrode containing sulfur and carbon material as active materials. Through this, the applicant of the present invention has invented a lithium-sulfur battery that can utilize not only 80% or more of the theoretical discharging capacity of sulfur (i.e., the initial discharging capacity of the battery is at least 1,340 mAh/g), preferably 90 to 100%, and more preferably 94 to 100%, but also have a high energy density of about 400 Wh/kg or more or 600 Wh/L or more.

Hereinafter, each of A) a first solvent containing fluorine-based ether compounds, B) a second solvent containing a glyme-based compound, C) lithium salt and D) a positive electrode included in the lithium-sulfur battery of the present invention will be described in detail.

### A) First solvent

The first solvent is an electrolyte solvent containing fluorine-based ether compounds and has an effect of suppressing polysulfide dissolution and solvent decomposition, and thus it serves to improve the coulombic efficiency (C.E.) of the battery and ultimately improve the lifespan of the battery. More specifically, the first solvent containing the fluorine-based ether compounds has excellent structural stability compared to general organic solvents containing alkanes due to fluorine substitution, and thus has very high stability. Accordingly, if it is used in the electrolyte solution of the lithium-sulfur battery, the stability of the electrolyte solution can be greatly improved, thereby improving the lifetime performance of the lithium-sulfur battery.

The fluorine-based ether compounds may comprise, but is not limited to, at least one selected from the group consisting of 1,1,2,2-tetrafluoroethyl 2,2,3,3-tetrafluoropropyl ether (TTE), bis(fluoromethyl) ether, 2-fluoromethyl ether, bis(2,2,2-trifluoroethyl) ether, propyl 1,1,2,2-tetrafluoroethyl ether, isopropyl 1,1,2,2-tetrafluoroethyl ether, 1,1,2,2-tetrafluoroethyl isobutyl ether, 1,1,2,3,3,3-hexafluoropropylethyl ether, 1H,1H,2'H,3H-decafluorodipropyl ether and 1H,1H,2'H-perfluorodipropyl ether. Among them, it is preferable to comprise 1,1,2,2-tetrafluoroethyl 2,2,3,3-tetrafluoropropyl ether as the first solvent.

### B) Second solvent

The second solvent is an electrolyte solvent containing a glyme-based compound (but does not contain fluorine), which dissolves not only lithium salt so that the electrolyte solution has lithium-ion conductivity, but also serves to facilitate the electrochemical reaction with lithium by leaching sulfur, which is a positive electrode active material.

The glyme-based compound may comprise, but is not limited to, at least one selected from the group consisting of dimethoxyethane, diethoxyethane, methoxyethoxyethane, diethylene glycol dimethyl ether, diethylene glycol diethyl ether, diethylene glycol methylethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether and polyethylene glycol methyl ethyl ether. Among them, it is preferable to comprise dimethoxyethane as the second solvent.

### C) Lithium salt

The lithium salt is an electrolyte salt used to increase ion conductivity, and essentially comprises lithium bis(pentafluoroethanesulfonyl)imide (LiBETI).

In addition, the lithium salt may additionally include at least one selected from the group consisting of LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (C₂F₅SO₂)₂NLi, (CF₃SO₂)₃CLi, lithium chloroborane, lithium lower aliphatic carboxylic acid having 4 or less carbon atoms, lithium tetraphenyl borate, and lithium imide, but in order to achieve the object of the present invention, it is preferable to include only lithium bis(pentafluoroethanesulfonyl)imide as a lithium salt.

The concentration of the lithium salt may be determined in consideration of ion conductivity and the like, and may be 1 M to 1.8 M, preferably 1.2 to 1.5 M. If the concentration of the lithium salt is less than 1 M, it is difficult to ensure ion conductivity suitable for operating the battery. If the concentration of the lithium salt exceeds 1.8 M, the viscosity of the electrolyte is increased, so that the mobility of lithium ions is deteriorated, or the decomposition reaction of the lithium salt itself is increased, thereby deteriorating the performance of the battery.

In the electrolyte containing the first solvent, the second solvent and the lithium salt as described above, the molar ratio of the lithium salt, the second solvent and the first solvent is 1: 1.5 to 2.7: 2.8 to 5, preferably 1: 1.7 to 2.7: 2.8 to 4.5, and more preferably 1: 1.9 to 2.4: 3.1 to 3.6. If the molar ratio of the lithium salt, the second solvent and the first solvent deviates from the above range (1: 1.5 to 2.7: 2.8 to 5), the discharge capacity and lifetime performance of the battery is deteriorated, making it impossible to achieve the object of the present invention.

In addition, as can be seen through the range of molar ratio of the lithium salt, the second solvent and the first solvent, the present invention is also characterized in that the first solvent is comprised in a higher content ratio than the second solvent containing glyme-based compounds. As such, if the first solvent containing the fluorine-based ether compound is included in a higher content ratio than the second solvent containing the glyme compound, it has an advantage that it suppresses the production of polysulfide, enabling the realization of the battery capacity close to the theoretical capacity of sulfur, and suppressing the decrease in the capacity of the battery due to use of the battery. Therefore, the first solvent containing the fluorine-based ether compound should be included in a higher content ratio (molar ratio) than the second solvent containing the glyme-based compound.

### D) Positive electrode

The lithium-sulfur battery according to the present invention comprises a positive electrode containing sulfur and carbon material as an active material, a negative electrode, a separator interposed between the positive electrode and the negative electrode, and an electrolyte containing A) the first solvent containing fluorine-based ether compounds, B) the second solvent containing a glyme-based compound, and C) the lithium salt as described above. Hereinafter, the positive electrode will be described in detail.

The positive electrode comprised in the lithium-sulfur battery of the present invention comprises a positive electrode active material, a binder, and an electrically conductive material. Also, the positive electrode may be one in which a base solid containing an active material, a binder and an electrically conductive material is located on a current collector. The positive electrode active material may be one which is applied to a conventional lithium-sulfur battery, and may comprise, for example, elemental sulfur (Ss), a sulfur-based compound, or a mixture thereof. Specifically, the sulfur-based compound may be Li₂Sₙ(n≥1), an organosulfur compound, or a carbon-sulfur composite ((C₂Sₓ)ₙ: x=2.5 ~ 50, n≥2). In addition, the positive electrode active material may comprise a sulfur-carbon composite, and since the sulfur material alone is not electrically conductive, it can be used in combination with an electrically conductive material.

The sulfur-carbon composite may have a particle size of 1 to 100 *µ*m. If the particle size of the sulfur-carbon composite is less than 1 *µ*m, there is a problem that the resistance between the particles increases and an overvoltage occurs in the electrode of the lithium-sulfur battery. If the particle size exceeds 100 *µ*m, the surface area per unit weight is reduced, and thus the wetting area with the electrolyte in the electrode and the reaction site with the lithium ion are decreased, and the amount of electron transfer relative to the size of the composite is reduced, so that the reaction can be delayed, and as a result, the discharging capacity of the battery can be reduced.

The sulfur (S) may be contained in an amount of 60 to 80% by weight, preferably 67.5 to 75% by weight, based on the total weight of the positive electrode. The content of sulfur in the positive electrode of a conventional lithium-sulfur battery is about 40 to 60% by weight relative to the total weight of the positive electrode, but despite the fact that the present invention uses sulfur in a significantly higher content than this, the present invention shows a high initial discharge capacity under the condition of the electrolyte of the present invention. If the sulfur is used in an amount of less than 60% by weight with respect to the total weight of the positive electrode, there may be a problem that the energy density of the battery is decreased. If the sulfur is used in an amount exceeding 80% by weight, there may be a problem that the conductivity in the electrode is lowered and the stability of the electrode is lowered.

The carbon material (or sulfur supporting material) constituting the sulfur-carbon composite has porosity, and particularly, since the carbon material used as the positive electrode active material of the present invention has the characteristics of a high specific surface area (1,700 m²/g or more, preferably 3,000 m²/g or more) and high porosity (pore volume: 0.7 to 3 cm³/g), it is possible to operate with high capacity (1,340 to 1,675 mAh/g) in the above electrolyte.

As the porous carbon material, all carbon materials satisfying a pore volume of 0.7 to 3 cm³/g can be exemplified, and specifically, at least one selected from the group consisting of graphite; graphene; reduced graphene oxide(rGO); carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); and activated carbon satisfying a pore volume of 0.7 to 3 cm³/g may be exemplified, and its shape may be spherical, rod-shaped, needle-shaped, plate-shaped, tubular-shaped, or bulk-shaped.

The positive electrode active material including sulfur and carbon material may be comprised in an amount of 80 to 99 parts by weight, preferably 90 to 95 parts by weight, based on 100 parts by weight of the total weight of the positive electrode. If the content of the positive electrode active material is less than 80 parts by weight with respect to 100 parts by weight of the total weight of the positive electrode, there may be a problem that the energy density of the battery is reduced. If the content of the positive electrode active material exceeds 99 parts by weight, there may be a problem that the conductivity in the electrode is lowered and the stability of the electrode is lowered. Meanwhile, in the above, the 'total weight of positive electrode' used to indicate the content of sulfur and the content of the positive electrode active material means the total content of the positive electrode active material, the binder, and the electrically conductive material, excluding the positive electrode current collector.

The binder is a component that assists in the bonding between the positive electrode active material and the electrically conductive material, etc., and the bonding to current collector, and for example, may be, but is not limited to, at least one selected from the group consisting of polyvinylidenefluoride (PVdF), polyvinylidenefluoride-polyhexafluoropropylene copolymer (PVdF/HFP), polyvinylacetate, polyvinylalcohol, polyvinylether, polyethylene, polyethyleneoxide, alkylated polyethyleneoxide, polypropylene, polymethyl(meth)acrylate, polyethyl(meth)acrylate, polytetrafluoroethylene (PTFE), polyvinylchloride, polyacrylonitrile, polyvinylpyridine, polyvinylpyrrolidone, styrenebutadiene rubber, acrylonitrile-butadiene rubber, ethylene-propylene-diene monomer (EPDM) rubber, sulfonated EPDM rubber, styrene-butylene rubber, fluorine rubber, carboxymethylcellulose (CMC), starch, hydroxypropyl cellulose, regenerated cellulose, and mixtures thereof.

The binder is usually added in an amount of 1 to 50 parts by weight, preferably 3 to 15 parts by weight, based on 100 parts by weight of the total weight of the positive electrode. If the content of the binder is less than 1 part by weight, the adhesive strength between the positive electrode active material and the current collector may be insufficient. If the content of the binder exceeds 50 parts by weight, the adhesive strength is improved but the content of the positive electrode active material may be reduced accordingly, thereby lowering the capacity of the battery.

The electrically conductive material comprised in the positive electrode is not particularly limited as long as it does not cause side reactions in the internal environment of the battery and has excellent electrical conductivity while not causing chemical changes in the battery. The electrically conductive material may typically be graphite or electrically conductive carbon, and may be, for example, but is not limited to, one selected from the group consisting of graphite such as natural graphite or artificial graphite; carbon black such as carbon black, acetylene black, Ketjen black, Denka black, thermal black, channel black, furnace black, lamp black, etc.; carbon-based materials whose crystal structure is graphene or graphite; carbon nanotubes; electrically conductive fibers such as carbon fibers and metal fibers; carbon fluoride; metal powders such as aluminum and nickel powder; electrically conductive whiskers such as zinc oxide and potassium titanate; electrically conductive oxides such as titanium oxide; electrically conductive polymers such as polyphenylene derivatives; and a mixture of two or more thereof.

The electrically conductive material may be added in an amount of 0.5 to 10 parts by weight, preferably 0.5 to 5 parts by weight, based on 100 parts by weight of the total weight of the positive electrode, but may not be comprised in the positive electrode of the present invention. If the content of the electrically conductive material exceeds 10 parts by weight, that is, if it is too much, the amount of positive electrode active material is relatively small and thus capacity and energy density may be lowered. The method of incorporating the electrically conductive material into the positive electrode is not particularly limited, and conventional methods known in the related art such as coating on the positive electrode active material can be used. Also, if necessary, the addition of the second coating layer with electrical conductivity to the positive electrode active material may replace the addition of the electrically conductive material as described above.

In addition, a filler may be selectively added to the positive electrode of the present invention as a component for inhibiting the expansion of the positive electrode. Such a filler is not particularly limited as long as it can inhibit the expansion of the electrode without causing chemical changes in the battery, and examples thereof may comprise olefinic polymers such as polyethylene and polypropylene; fibrous materials such as glass fibers and carbon fibers.

The positive electrode active material, the binder, the electrically conductive material and the like are dispersed and mixed in a dispersion medium (solvent) to form a slurry, and the slurry can be applied onto the positive electrode current collector, followed by drying and rolling it to prepare a positive electrode. The dispersion medium may be, but is not limited to, N-methyl-2-pyrrolidone (NMP), dimethyl formamide (DMF), dimethyl sulfoxide (DMSO), ethanol, isopropanol, water, and a mixture thereof.

The positive electrode current collector may be, but is not necessarily limited to, platinum (Pt), gold (Au), palladium (Pd), iridium (Ir), silver (Ag), ruthenium (Ru), nickel (Ni), stainless steel (STS), aluminum (Al), molybdenum (Mo), chromium (Cr), carbon (C), titanium (Ti), tungsten (W), ITO (In doped SnO₂), FTO (F doped SnO₂), or an alloy thereof, and aluminum (Al) or stainless steel whose surface is treated with carbon (C), nickel (Ni), titanium (Ti) or silver (Ag) or so on. The shape of the positive electrode current collector may be in the form of a foil, film, sheet, punched form, porous body, foam or the like.

The negative electrode is a lithium-based metal, and may further include a current collector on one side of the lithium-based metal. The current collector may be a negative electrode current collector. The negative electrode current collector is not particularly limited as long as it has high electrical conductivity without causing chemical changes in the battery, and may be selected from the group consisting of copper, aluminum, stainless steel, zinc, titanium, silver, palladium, nickel, iron, chromium, and alloys and combinations thereof. The stainless steel can be surface-treated with carbon, nickel, titanium, or silver, and the alloy may be an aluminum-cadmium alloy. In addition, sintered carbon, a non-conductive polymer surface-treated with an electrically conductive material or a conductive polymer may be used. In general, a thin copper foil is used as the negative electrode current collector.

In addition, the shape of the negative electrode current collector can be various forms such as a film having or not having fine irregularities on its surface, sheet, foil, net, porous body, foam, nonwoven fabric and the like. In addition, the thickness of the negative electrode current collector is in the thickness range of 3 to 50 *µ*m. If the thickness of the negative electrode current collector is less than 3 *µ*m, the current collecting effect is lowered. On the other hand, if the thickness exceeds 50 *µ*m, when folding and then assembling the cell, there is a problem that the workability is reduced.

The lithium-based metal may be lithium or a lithium alloy. In that case, the lithium alloy contains an element capable of alloying with lithium, and specifically the lithium alloy may be an alloy of lithium and at least one selected from the group consisting of Si, Sn, C, Pt, Ir, Ni, Cu, Ti, Na, K, Rb, Cs, Fr, Be, Mg, Ca, Sr, Sb, Pb, In, Zn, Ba, Ra, Ge and Al. The lithium-based metal may be in the form of a sheet or foil, and in some cases, may be in a form in which lithium or a lithium alloy is deposited or coated on a current collector by a dry process, or may be in a form in which metal and an alloy in a particle phase are deposited or coated by a wet process or the like.

A conventional separator may be interposed between the positive electrode and the negative electrode. The separator is a physical separator having a function of physically separating the electrodes, and can be used without a particular limitation as long as it is used as a conventional separator, and particularly, a separator with low resistance to ion migration in the electrolyte solution and excellent impregnating ability for the electrolyte solution is preferable. In addition, the separator enables the transport of lithium ions between the positive electrode and the negative electrode while separating or insulating the positive electrode and the negative electrode from each other. This separator may be made of a porous, nonconductive, or insulating material. The separator may be an independent member such as a film or a coating layer added to the positive electrode and/or the negative electrode.

Examples of the polyolefin-based porous film which can be used as the separator may be films formed of any polymer alone selected from polyethylene such as high-density polyethylene, linear low-density polyethylene, low-density polyethylene, and ultra-high molecular weight polyethylene, and polyolefin-based polymers such as polypropylene, polybutylene, and polypentene, or formed of a polymer mixture thereof. Examples of the nonwoven fabric that can be used as the separator is a nonwoven fabric formed by a polymer of polyphenyleneoxide, polyimide, polyamide, polycarbonate, polyethyleneterephthalate, polyethylenenaphthalate, polybutyleneterephthalate, polyphenylenesulfide, polyacetal, polyethersulfone, polyetheretherketone, polyester and the like alone or a mixture thereof. Such nonwoven fabrics are in the form of a fiber to form a porous web, that is, a spun-bond or a melt-blown nonwoven fabric composed of long fibers.

The thickness of the separator is not particularly limited, but is preferably in the range of 1 to 100 *µ*m, more preferably 5 to 50*µ*m. If the thickness of the separator is less than 1 *µ*m, the mechanical properties cannot be maintained. If the thickness of the separator exceeds 100 *µ*m, the separator acts as a resistive layer, thereby deteriorating the performance of the battery. The pore size and porosity of the separator are not particularly limited, but it is preferable that the pore size is 0.1 to 50 *µ*m and the porosity is 10 to 95%. If the separator has a pore size of less than 0.1 *µ*m or a porosity of less than 10%, the separator acts as a resistive layer. If the separator has a pore size of exceeding 50 *µ*m or a porosity of exceeding 95%, mechanical properties cannot be maintained.

The lithium-sulfur battery of the present invention comprising the electrolyte solution, the positive electrode, the negative electrode, and the separator as described above can be manufactured through a process of facing the positive electrode with the negative electrode, interposing the separator between them, and then injecting the electrolyte solution.

On the other hand, the lithium-sulfur battery according to the present invention is applied to a battery cell used as a power source for a small device, and can be also particularly suitably used as a unit cell for a battery module, which is a power source for medium and large-sized devices. In this aspect, the present invention also provides a battery module comprising two or more lithium-sulfur batteries electrically connected (series or parallel). Of course, the quantity of lithium-sulfur batteries comprised in the battery module may be variously adjusted in consideration of the use and capacity of the battery module. Furthermore, the present invention provides a battery pack in which the battery modules are electrically connected according to a conventional technique in the art. The battery module and the battery pack may be used as a power source for any one or more medium and large-sized devices among a power tool; electric vehicles including electric vehicle (EV), a hybrid electric vehicle (HEV), and a plug-in hybrid electric vehicle (PHEV); electric truck; electric commercial vehicles; or power storage systems, but are not limited thereto.

Hereinafter, preferred examples are presented to aid understanding of the present invention, but the following examples are merely illustrative of the present invention, and it is obvious to those skilled in the art that various changes and modifications are possible within the scope and spirit of the present invention, and it goes without saying that that these changes and modifications fall within the scope of the appended claims.

### [Example 1] Manufacture of lithium-sulfur battery

### Preparation of electrolyte

First, lithium bis(pentafluoroethanesulfonyl)imide (LiBETI, concentration: 1.2 M), dimethoxyethane (DME, second solvent), and 1,1,2,2-tetrafluoroethyl 2,2,3,3-tetrafluoropropyl ether (TTE, first solvent) were mixed at room temperature in a molar ratio of 1: 2.4: 3.6 to prepare a electrolyte for a lithium-sulfur battery.

### Manufacture of positive electrode

90 parts by weight of a sulfur-carbon composite (S: C = 75: 25 weight ratio) as a positive electrode active material (the content of sulfur alone was set to be 67.5% by weight based on the total weight of the positive electrode, and as the carbon material, activated carbon having a pore volume of 1.8 cm³/g was used), 5 parts by weight of Denka black as an electrically conductive material and 5 parts by weight of styrene butadiene rubber/carboxymethyl cellulose (SBR: CMC = 7: 3) as a binder were mixed to prepare a slurry composition for a positive electrode, and then, the prepared slurry composition was coated on a current collector (Al foil), dried at 50 °C for 12 hours, and pressurized with a roll press to prepare a positive electrode (at this time, the loading amount was set to 3.5 mAh/cm², and the porosity of the electrode was set to 65%).

### Manufacture of lithium-sulfur battery

The prepared positive electrode and the lithium metal negative electrode having a thickness of 150 *µ*m are positioned to face each other, and a polyethylene (PE) separator is interposed therebetween, and the prepared electrolyte is injected to manufacture a coin cell type lithium-sulfur battery. Meanwhile, in the manufacture of the battery, the positive electrode was used after being punched out as a circular electrode of 14 phi, the polyethylene separator was used after being punched out at 19 phi, and the lithium metal was used after being punched out at 16 phi.

### [Example 2, Comparative Examples 1-4] Manufacture of lithium-sulfur battery

Lithium-sulfur batteries corresponding to each of Example 2 and Comparative Examples 1 to 4 were manufactured in the same manner as in Example 1, except that in the lithium-sulfur battery of Example 1 prepared above, the composition of the electrolyte is changed as shown in Table 1 below.

**Table 1:**

| | Molar ratio of each component in the electrolyte | | |
|---|---|---|---|
| | Lithium salt | Second solvent | First solvent |
| Example 1 | 1 (1.2M LiBETI) | 2.4 (DME) | 3.6 (TTE) |
| Example 2 | 1 (1.5M LiBETI) | 1.9 (DME) | 3.1 (TTE) |
| Comparative Example 1 | 1 (0.5M LiBETI) | 5.8 (DME) | 9.2 (TTE) |
| Comparative Example 2 | 1 (0.9M LiBETI) | 3.2 (DME) | 5.1 (TTE) |
| Comparative Example 3 | 1 (2.0M LiBETI) | 1.4 (DME) | 2.3 (TTE) |
| Comparative Example 4 | 1 (1.5M LiTFSI) | 1.9 (DME) | 3.1 (TTE) |

### [Experimental Example 1] Evaluation of discharging capacity and lifetime characteristics of lithium-sulfur battery

The lithium-sulfur batteries manufactured in Examples 1 and 2 and Comparative Examples 1 to 4 were charged and discharged at 0.5C for 50 cycles, and the discharging capacity and lifetime characteristics of the batteries were evaluated. In this case, the voltage range used was 1.5 to 3.0 V (that is, up to 1.5 V for discharging and up to 3.0 V for charging), and the evaluation was conducted at room temperature.

FIG. 1 is a graph showing discharging capacity and lifetime characteristics of lithium-sulfur batteries manufactured according to an example of the present invention and a comparative example. In the electrolyte included in the lithium-sulfur battery of the present invention, the mixed molar ratio of the lithium salt, the second solvent and the first solvent is 1: 1.5 to 2.7: 2.8 to 5, preferably 1: 1.7 to 2.7: 2.8 to 4.5, and more preferably 1: 1.9 to 2.4: 3.1 to 3.6 as described above.

In addition, it was confirmed that the lithium-sulfur batteries of Examples 1 and 2 having the mixed molar ratio of the lithium salt, the second solvent and the first solvent contained in the electrolyte in the range of 1: 1.5 to 2.7: 2.8 to 5, respectively are superior in both initial discharging capacity and lifetime characteristics compared to the lithium-sulfur batteries of Comparative Examples 1 to 3, in which the mixed molar ratio of lithium salt, second solvent, and first solvent contained in the electrolyte is not in the range of 1: 1.5 to 2.7: 2.8 to 5, as shown in FIG. 1. In other words, it can be seen that even if the type of lithium salt and solvent is the same, it is impossible to improve the performance of the battery without mixing them in a certain ratio.

On the other hand, even though the lithium-sulfur battery of Comparative Example 4 was the same as Example 2 in the mixing molar ratio of the lithium salt, the second solvent and the first solvent contained in the electrolyte, its discharging capacity decreased rapidly compared to Example 2, after about 25 cycles, and it also led to a decrease in lifetime performance, as shown in FIG. 1. This is due to the difference in the type of lithium salt, as can be seen from Table 1, and it can be seen that the discharging capacity and lifetime characteristics of the battery are improved when LiBETI is used as a lithium salt instead of the commonly used LiTFSI.

## Claims

1. A lithium-sulfur battery, comprising:
an electrolyte containing a first solvent containing fluorine-based ether compounds, a second solvent containing a glyme-based compound, and a lithium salt containing lithium bis (pentafluoroethanesulfonyl) imide; and
a positive electrode containing sulfur and carbon material as an active material.

2. The lithium-sulfur battery according to claim 1, wherein the molar ratio of the lithium salt, the second solvent and the first solvent contained in the electrolyte is 1: 1.5 to 2.7: 2.8 to 5.

3. The lithium-sulfur battery according to claim 2, wherein the concentration of the lithium salt is 1 M to 1.8 M.

4. The lithium-sulfur battery according to claim 1, wherein the fluorine-based ether compound is at least one selected from the group consisting of 1,1,2,2-tetrafluoroethyl 2,2,3,3-tetrafluoropropyl ether (TTE), bis (fluoromethyl) ether, 2-fluoromethyl ether, bis (2,2,2-trifluoroethyl) ether, propyl 1,1,2,2-tetrafluoroethyl ether, isopropyl 1,1,2,2-tetrafluoroethyl ether, 1,1,2,2-tetrafluoroethyl isobutyl ether, 1,1,2,3,3,3-hexafluoropropylethyl ether, 1H,1H,2'H,3H-decafluorodipropyl ether and 1H,1H,2'H-perfluorodipropyl ether.

5. The lithium-sulfur battery according to claim 1, wherein the glyme-based compound comprises at least one selected from the group consisting of dimethoxyethane, diethoxyethane, methoxyethoxyethane, diethylene glycol dimethyl ether, diethylene glycol diethyl ether, diethylene glycol methylethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether and polyethylene glycol methyl ethyl ether.

6. The lithium-sulfur battery according to claim 1, wherein the electrolyte does not contain a nitrile-based solvent.

7. The lithium-sulfur battery according to claim 1, wherein sulfur is contained in an amount of 60 to 80% by weight relative to the total weight of the positive electrode.

8. The lithium-sulfur battery according to claim 1, wherein the pore volume of the carbon material is 0.7 to 3 cm³/g, and the specific surface area is 1,700 m²/g or more.

9. The lithium-sulfur battery according to claim 1, wherein the positive electrode active material comprised in the positive electrode comprises a sulfur-carbon composite.

10. The lithium-sulfur battery according to claim 1, wherein the utilization rate of sulfur contained in the positive electrode is 80% or more of the theoretical discharging capacity.

11. The lithium-sulfur battery according to claim 1, wherein the energy density of the lithium-sulfur battery is 400 Wh/kg or more or 600 Wh/L or more.

12. The lithium-sulfur battery according to claim 1, wherein the first solvent is 1,1,2,2-tetrafluoroethyl 2,2,3,3-tetrafluoropropyl ether (TTE), the second solvent is dimethoxyethane (DME), and the lithium salt is lithium bis(pentafluoroethanesulfonyl)imide (LiBETI).

13. The lithium-sulfur battery according to claim 12, wherein the molar ratio of the lithium salt, the second solvent and the first solvent is 1: 1.9 to 2.4: 3.1 to 3.6.
